# EUROPÄISCHE PATENTSCHRIFT

(11) **EP 1 657 472 B1**
(45) Veröffentlichungstag und Bekanntmachung des Hinweises auf die Patenterteilung: **16.03.2011**
(21) Anmeldenummer: 05022543.2
(22) Anmeldetag: 15.10.2005
(51) Int. Cl.: F16F 15/10

(54) **Axiale Steckverbindungsanordnung**
Axial plug-in connection
Connexion enfichable axiale

(30) Priorität: 13.11.2004 DE 102004054991
(43) Veröffentlichungstag der Anmeldung: 17.05.2006
(73) Patentinhaber: Schaeffler Technologies GmbH & Co. KG, 91074 Herzogenaurach (DE)
(72) Erfinder: Strasser, Pascal, 67250 Aschbach (FR); Jäckel, Johann, 77830 Bühlertal (DE)

(56) Entgegenhaltungen:
- EP-A- 1 371 867
- DE-A1- 3 909 830

## Beschreibung

Die vorliegende Erfindung betrifft eine axiale Steckverbindungsanordnung mit einem Profilelement und einem Gegenprofilelement, an denen ein in Umfangsrichtung wirkendes Vorspannmoment zum gegenseitigen Verspannen aufbringbar ist. Ferner betrifft die vorliegende Erfindung eine Vorrichtung zum Dämpfen von Schwingungen im Antriebsstrang eines Fahrzeuges mit einer Dämpfungseinrichtung mit einer Primärmasse und einer Sekundärmasse, wobei die Sekundärmasse über die axiale Steckverbindungsanordnung mit einer Kupplungsanordnung verbunden ist.

Eine axiale Steckverbindungsanordnung mit einem Profilelement und einem Gegenprofilelement ist hinreichend bekannt. Beispielsweise können als Profilierungen an dem Profilelement und dem Gegenprofilelement korrespondierende Verzahnungen vorgesehen sein.

Beispielsweise aus der Druckschrift DE 39 09 930 C2 ist eine Einrichtung zum Dämpfen von Schwingungen im Antriebsstrang eines Kraftfahrzeuges offenbart, welche eine derartige Steckverbindungsanordnung umfasst. Die bekannte Einrichtung ist im Kraftübertragungsweg vom Motor zu einem Getriebe vorgesehen, wobei eine mit dem Motor verbindbare erste Schwungmasse, wenigstens eine Dämpfungseinrichtung und eine weitere mit dem Getriebe verbindbare Schwungmasse vorgesehen sind. Die Dämpfungseinrichtung weist wenigstens einen Kraftspeicher, der bei einer Relativverdrehung der beiden Schwungmassen komprimierbar ist, ein Ausgangsteil und ein Eingangsteil auf, wobei eines dieser Teile drehfest jedoch axial verlagerbar über die axiale Steckverbindungsanordnung befestigbar ist.

In Folge von Herstellungstoleranzen kann ein Spiel bei der axialen Steckverbindungsanordnung insbesondere bei bestimmten Betriebszuständen des Fahrzeugs bzw. des Motors auftreten, welches als Klappern wahrgenommen werden kann. Deshalb wird vorgesehen, dass das Profilelement und das Gegenprofilelement gegeneinander in Umfangsrichtung verspannt werden. Durch eine solche Verspannung kann ein Aufprall der die Drehmomentübertragung bewirkenden Flanken der Profilierungen und Gegenprofilierungen zumindest gedämpft werden. Dazu wird bei der bekannten axialen Steckverbindungsanordnung die Verspannung durch eine zusätzliche Feder ermöglicht, welche in Umfangsrichtung ein Vorspannmoment aufbringt, um das Profilelement und das Gegenprofilelement gegeneinander zu verspannen.

Der vorliegenden Erfindung liegt die Aufgabe zugrunde, eine axiale Steckverbindungsanordnung und eine Vorrichtung zum Dämpfen von Schwingungen mit einer Steckverbindungsanordnung der jeweils eingangs genannten Gattungen vorzuschlagen, welche ohne zusätzliche Bauteile das Aufbringen eines in Umfangsrichtung wirkenden Vorspannmoments bei der Steckverbindungsanordnung realisieren.

Diese Aufgabe wird erfindungsgemäß durch eine axiale Steckverbindungsanordnung mit einem Profilelement und einem Gegenprofilelement nach Anspruch 1 gelöst.

Vorteilhafte Ausgestaltungen ergeben sich insbesondere aus den Unteransprüchen.

Ein besonderer Vorteil der vorliegenden Erfindung liegt darin, dass bei der erfindungsgemäßen Steckverbindungsanordnung bei der axialen Montage allein aufgrund der besonderen Profilierung eine Relativbewegung bewirkt wird, wodurch das gewünschte Vorspannmoment aufgebracht werden kann, ohne dass zusätzliche Bauteile, wie z. B. Federn, bei der erfindungsgemäßen Steckverbindungsanordnung verwendet werden. Auf diese Weise ist eine besonders einfache Montage und eine kostengünstige Fertigung der Steckverbindungsanordnung ohne weiteres möglich.

Im Rahmen der Ausgestaltung der vorliegenden Erfindung ist vorgesehen, dass an dem Profilelement zumindest ein sich im Wesentlichen in radialer Richtung erstreckendes Hebelelement angeformt ist. An dem freien Ende des Hebelelements ist zumindest ein beispielsweise im Wesentlichen in axialer Richtung erstreckender Fortsatz zum Verspannen mit dem Gegenprofilelement vorgesehen. Es ist auch möglich, dass das Hebelelement z. B. an dem Gegenprofilelement vorgesehen ist, um sich dann mit dem Fortsatz an dem Profilelement zu verspannen.

Eine mögliche Weiterbildung der vorliegenden Erfindung kann vorsehen, dass das Profilelement und das Gegenprofilelement jeweils etwa scheibenförmig ausgebildet sind, wobei als Profilierung jeweils mehrere über den Umfang angeordnete Eingriffsfenster oder dergleichen vorgesehen sind, in die jeweils korrespondierende in axialer Richtung vorstehende Abschnitte des Profilelements und auch des Gegenprofilelements wechselseitig eingreifen. Somit können Eingriffsfenster sowohl an dem Profilelement als auch an dem Gegenprofilelement derart versetzt zueinander angeordnet sein, dass jeweils die vorgesehenen Eingreifabschnitte wechselseitig in die jeweils korrespondierenden Eingreifsfenster eingreifen können, sodass das Profilelement und das Gegenprofilelement in axialer Richtung ineinander greifen. Auf diese Weise sind das Profilelement und das Gegenprofilelement drehfest miteinander verbunden.

Die Eingriffsfenster und die korrespondierenden Eingreifabschnitte können beliebig ausgebildet sein. Vorzugsweise kann jedoch jedes Eingriffsfenster etwa teilkreisringsförmig und jeder Eingreifabschnitt als gebogener Bereich an dem Profilelement und an dem Gegenprofilelement ausgebildet sein.

Um das gewünschte Vorspannmoment auf möglichst einfache Weise zu erzeugen, kann vorgesehen sein, dass das Hebelelement mit seinem Fortsatz derart an dem Profilelement angeformt bzw. angeordnet ist, dass der Fortsatz an einem korrespondierenden Eingriffsfenster des Gegenprofilelements verspannt wird. Besonders vorteilhaft ist es, wenn der Fortsatz als ein um etwa 90 ° gebogenes Ende an dem Hebelelement vorgesehen ist. vorzugsweise kann das Ende des Fortsatzes eine keilförmige oder dergleichen Querschnittsform aufweisen. Auf diese Weise kann die angeschrägte Seite der Keilform kontinuierlich das Vorspannmoment bei der Montage erhöhen, bis ein gewünschter Wert erreicht ist. Durch die Verlängerung des Hebelelements in radialer Richtung und durch die Änderung der Abmessung des korrespondierenden Eingriffsfensters kann ein jeweils gewünschtes Vorspannmoment aufgebracht werden.

Die elastischen Eigenschaften des angeformten Hebelelements können z. B. dadurch verbessert werden, dass gemäß einer weiteren Ausgestaltung der vorliegenden Erfindung vorgesehen ist, dass das Profilelement am radial inneren Bereich über den Umfang verteilt angeordnete Ausnehmungen aufweist, welche sich etwa fingerartig in radialer Richtung erstrecken. Ein optimaler Effekt kann erreicht werden, wenn sich das Hebelelement gerade im Bereich zwischen zwei benachbarten Ausnehmungen befindet. Es sind jedoch auch andere Ausführungsformen denkbar, um eine erforderliche Elastizität des angeformten Hebelelements zu realisieren, sodass die gewünschte Vorspannung aufgebracht werden kann.

Vorzugsweise können mehrere Hebelelemente über den Umfang des Profilelements verteilt angeordnet sein. Beispielsweise können drei Hebelelemente jeweils im Winkel von etwa 120° zueinander über den Umfang des Profilelements verteilt sein, wobei an dem Gegenprofilelement dann an korrespondierenden Positionen jeweils ein Eingriffsfenster für jedes Hebelelement angeordnet ist.

Die vorgeschlagene axiale Steckverbindungsanordnung kann für jede denkbare Anwendung, bei der zwei Teile in axialer Richtung miteinander befestigt und in Umfangsrichtung verspannt werden, eingesetzt werden.

Eine besonders bevorzugte Verwendung kann bei einer Vorrichtung zum Dämpfen von Schwingungen im Antriebsstrang eines Fahrzeuges realisiert werden.

Demnach wird die der vorliegenden Erfindung zugrunde liegende Aufgabe auch durch eine Vorrichtung zum Dämpfen von Schwingungen im Antriebsstrang eines Fahrzeuges mit einer Dämpfungseinrichtung mit einer Primärmasse und einer Sekundärmasse gelöst, bei der die Sekundärmasse über eine axiale Steckverbindungsanordnung mit einer Kupplungsanordnung verbunden ist, wobei als Steckverbindungsanordnung vorzugsweise die erfindungsgemäß vorgeschlagene Steckverbindungsanordnung vorgesehen ist.

Eine Weiterbildung der vorliegenden Erfindung kann vorsehen, dass das Profilelement der Steckverbindungsanordnung als Verbindungsdeckel ausgebildet ist, welcher über eine Kupplungsanordnung mit der Getriebeseite verbunden ist. Als Kupplungsanordnung kann vorzugsweise eine Doppelkupplung vorgesehen sein.

Vorzugsweise kann das Gegenprofilelement der Steckverbindungsanordnung als flanschartiges Bauteil oder dergleichen ausgebildet sein, welches mit der Sekundärmasse der Dämpfungseinrichtung verbunden ist. Somit verbindet die Steckverbindungsanordnung die Dämpfungseinrichtung mit der getriebeseitigen Kupplungsanordnung.

Nachfolgend wird die vorliegende Erfindung anhand der dazugehörigen Zeichnungen näher erläutert. Es zeigen:
- Figur 1: eine Einzelteildarstellung einer möglichen Ausführungsform eines Profilelements einer erfindungsgemäßen axialen Steckverbindungsanordnung;
- Figur 2: eine Einzeldarstellung einer möglichen Ausführungsform eines Gegenprofilelementes der erfindungsgemäßen Steckverbindungsanordnung;
- Figur 3: eine Draufsicht auf die zusammengefügte und verspannte Steckverbindungsanordnung;
- Figur 4: zwei entlang der Schnittlinie I bis I geschnittene Ansichten gemäß Figur 3, wobei unterschiedliche Einbauzustände dargestellt sind; und
- Figur 5: eine geschnittene Teilansicht eines Antriebsstranges eines Fahrzeuges mit der eingebauten Steckverbindungsanordnung.

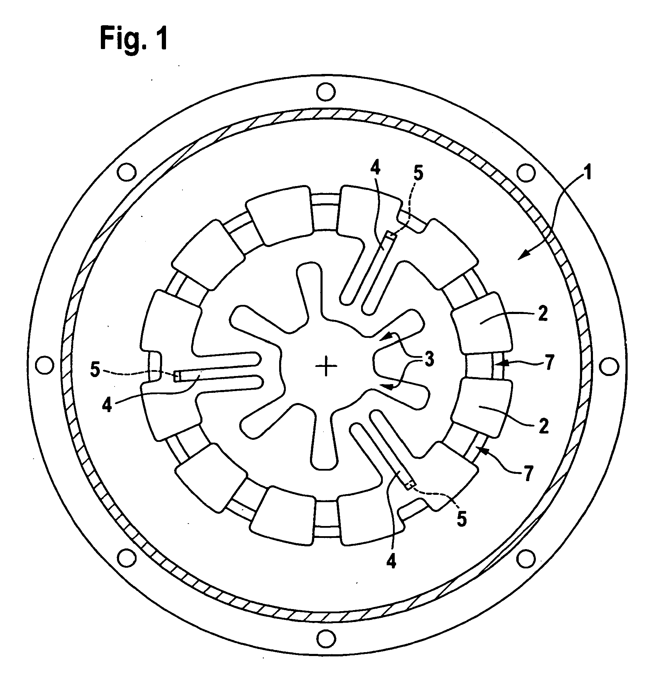

In Figur 1 ist eine mögliche Ausführungsform eines Profilelements einer erfindungsgemäßen Steckverbindungsanordnung dargestellt. Bei dieser Ausführungsform ist das Profilelement als Verbindungsdeckel 1 ausgebildet.

Der etwa scheibenförmig ausgebildete Verbindungsdeckel 1 weist mehrere über den Umfang verteilt angeordnete Eingriffsfenster 2 auf, die jeweils etwa teilkreisringförmig ausgebildet sind. Zwischen benachbarten Eingriffsfenstern 2 sind in axialer Richtung gebogene Bereiche 3 als Eingreifabschnitte angeordnet, welche zum Eingreifen in die korrespondierenden an dem Gegenprofil vorgesehenen Eingriffsfenster dienen.

Im zentralen bzw. radial inneren Bereich des Verbindungsdeckels 1 sind über den Umfang verteilt angeordnete Ausnehmungen 3 vorgesehen, welche sich fingerartig von dem Zentrum des Verbindungsdeckels 1 in radiale Richtung erstrecken. Zwischen zwei Ausnehmungen 3 ist jeweils ein sich im Wesentlichen in radiale Richtung erstreckendes Hebelelement 4 angeformt, wobei sich das freie Ende radial nach außen erstreckt. An dem freien Ende ist ein sich im Wesentlichen in axiale Richtung erstreckender Fortsatz 5 zum Verspannen mit dem Gegenprofil angeordnet. Der Fortsatz 5 ist als etwa um 90° gebogenes Ende des Hebelelements 4 ausgebildet, wobei sich das Ende in axiale Richtung erstreckt. Bei dieser Ausführungsform sind mehrere Hebelelemente 4 vorgesehen, welche in einem Winkel von etwa 120° zueinander angeordnet bzw. beabstandet sind.

In den Bereichen, wo die Hebelelemente 4 jeweils angeordnet sind, sind die jeweils benachbarten Eingriffsfenster 2 miteinander verbunden. Die Ausnehmungen 3 im radial inneren Bereich des Verbindungsdeckels 1 ermöglichen dem jeweiligen Hebelelement 4 elastische Bewegungen in Umfangsrichtung zum Aufbringen des Vorspannmomentes.

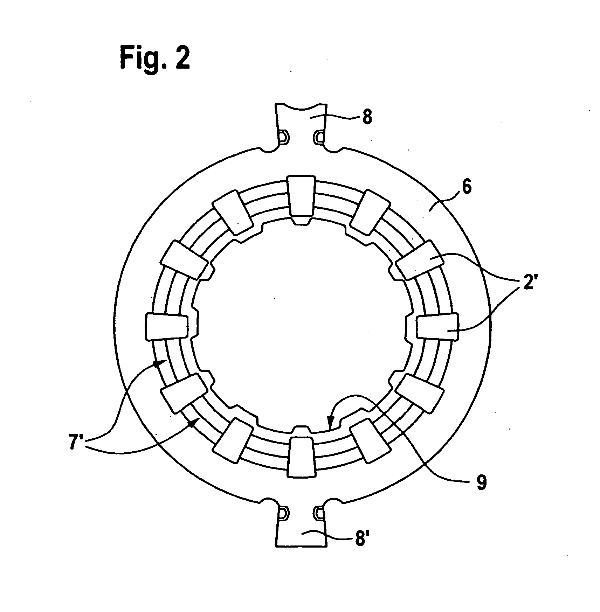

In Figur 2 ist eine mögliche Ausführungsform eines Gegenprofilelements der erfindungsgemäßen axialen Steckverbindungsanordnung dargestellt. Das Gegenprofilelement ist bei dieser Ausführungsform als Flansch 6 ausgebildet und weist ebenfalls über den Umfang verteilt angeordnete Eingriffsfenster 2' auf, welche gleichmäßig über den Umfang verteilt sind. Zwischen benachbarten Eingriffsfenstern 2' erstreckt sich jeweils in axialer Richtung ein gebogener Bereich 7', welcher jeweils zum Eingreifen in das korrespondierende Eingriffsfenster 2 an dem Verbindungsdeckel 1 dient. Auf diese Weise können der Verbindungsdeckel 1 und der Flansch 6 durch axiales Zusammenfügen drehfest miteinander verbunden werden. Der Flansch 6 weist an seinem äußeren Rand zwei radial abstehende Anformungen 8, 8' auf, mit denen der Flansch 6 befestigbar ist. An dem radial inneren Bereich des Flansches 6 ist eine Innenverzahnung 9 vorgesehen.

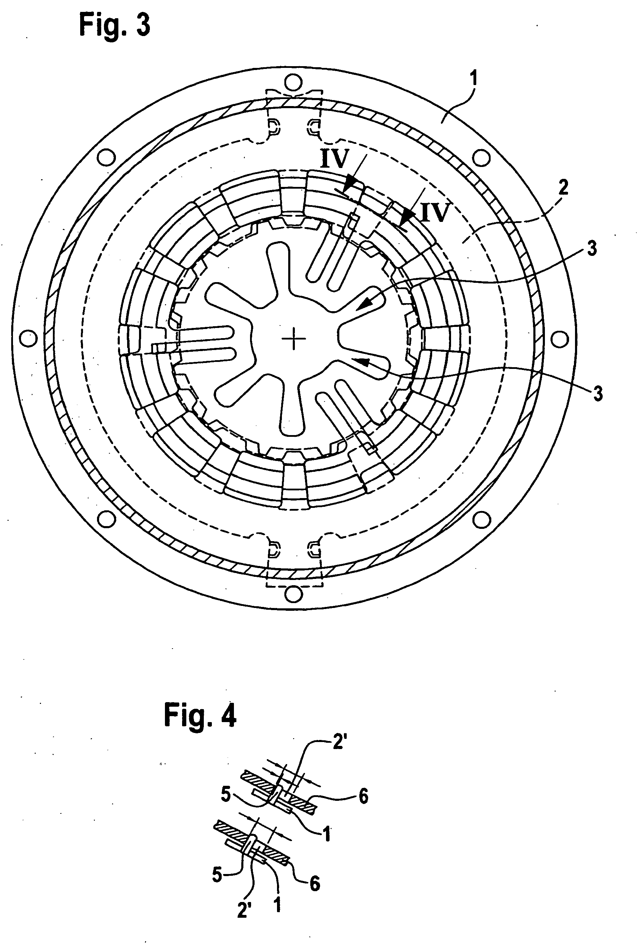

In Figur 3 ist eine Draufsicht auf einen zusammengebauten Zustand des Flansches 6 und des Verbindungsdeckels 1 gezeigt, wobei der Flansch 6 durch gestrichelte Linie angedeutet ist. Bei dem in Figur 3 dargestellten Zustand sind die jeweiligen Hebelelemente 4 des Verbindungsdeckels 1 jeweils in einem korrespondierenden Eingriffsfenster 2' des Flansches 6 verspannt, sodass ein vorbestimmtes Vorspannmoment in Umfangsrichtung zwischen den beiden zusammengebauten Teilen wirkt, sodass ein möglicherweise fertigungsbedingtes Spiel ausgeglichen wird und ein Klappern zwischen den beiden Bauteilen vermieden wird.

In Figur 4 sind zwei geschnittene Darstellungen entlang der Schnittlinie I bis I gemäß Figur 3 gezeigt. Die obere Darstellung von Figur 4 zeigt den noch nicht vollständig vorgespannten Zustand, während die untere Darstellung die Einbaulage zeigt, bei der die Hebelelemente 4 mit ihren Fortsätzen 5 in dem jeweils korrespondierenden Eingriffsfenster 2' des Flansches 6 verspannt sind. Die Breite des Eingriffsfensters 2' ist durch Pfeile angegeben. Ferner sind die Verspannung und die lose Lage sowie die Einbaulage durch weitere Pfeile angedeutet.

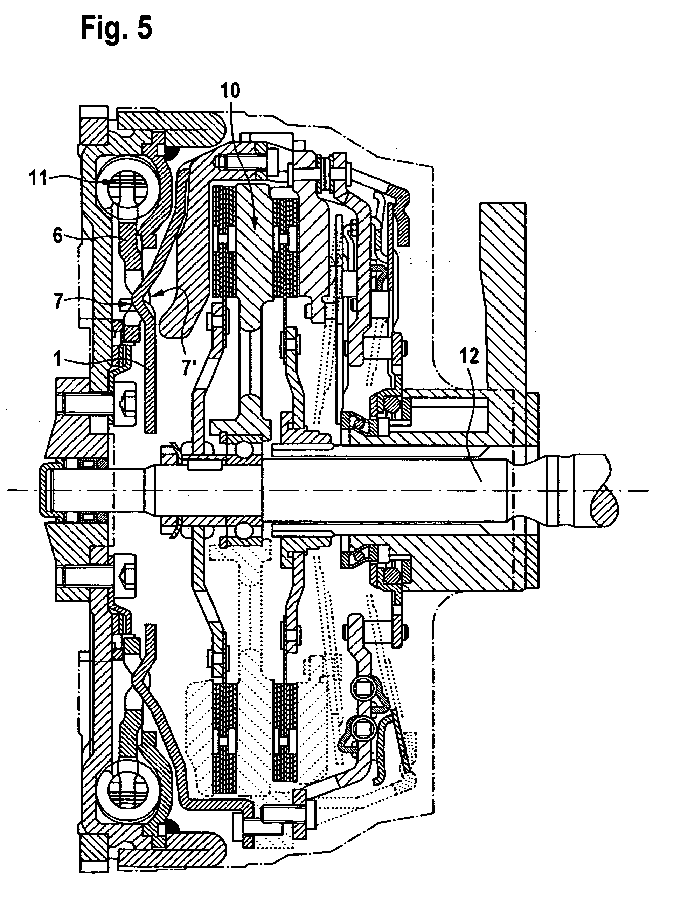

Figur 5 zeigt eine geschnittene Darstellung eines möglichen Anwendungsbeispieles für die erfindungsgemäße Steckverbindungsanordnung in einem Antriebsstrang eines Fahrzeuges. In Figur 5 ist eine Vorrichtung zum Dämpfen von Schwingungen im Antriebsstrang des Fahrzeuges mit einer Dämpfungseinrichtung 11 mit einer Primärmasse und einer Sekundärmasse im Kraftübertragungsweg zwischen einem Motor und einem Getriebe vorgesehen. Dabei ist die Primärmasse mit der Abtriebswelle eines nicht weiter dargestellten Verbrennungsmotors und die Sekundärmasse über die Steckverbindungsanordnung mit einer als Doppelkupplung 10 ausgebildeten Kupplungsanordnung an einer Getriebeeingangswelle 12 angebunden.

Dabei ist der Verbindungsdeckel 1 mit der Doppelkupplung 10 verbunden. Der Flansch 6 ist mit der Dämpfungseinrichtung 11 gekoppelt. Über die jeweils in die korrespondierenden Eingriffsfenster 2, 2' eingreifenden gebogenen Bereiche 7, 7' wird eine drehfeste Verbindung zwischen dem Flansch 6 und dem Verbindungsdeckel 1 realisiert. Durch die erfindungsgemäß vorgesehenen Hebelelemente 4 wird zudem ein gewünschtes Vorspannmoment in Umfangsrichtung aufgebracht, sodass der Verbindungsdeckel 1 und der Flansch 6 in Umfangsrichtung vorgespannt sind. Auf diese Weise werden Klappergeräusche vermieden.

### Bezugszeichenliste

- 1: Verbindungsdeckel
- 2,2': Eingriffsfenster
- 3: Ausnehmung
- 4: Hebelelement
- 5: Fortsatz
- 6: Flansch
- 7,7': gebogene Bereiche
- 8,8': Anformung
- 9: Innenverzahnung
- 10: Doppelkupplung
- 11: Dämpfungseinrichtung
- 12: Getriebeeingangswelle

## Patentansprüche

1. Axiale Steckverbindungsanordnung mit einem Profilelement und einem Gegenprofilelement, an denen ein in Umfangsrichtung wirkendes Vorspannmoment zum gegenseitigen Verspannen aufbringbar ist, wobei das Profilelement und das Gegenprofifelement derart profiliert sind, dass beim axialen Zusammenfügen eine Relativbewegung durch direktes Aneinandergreifen der Profilierungen des Profilelementes und des Gegenprofilelementes zum Aufbringen eines in Umfangrichtung wirkenden Vor spannmomentes vorgesehen ist, wobei
an dem Profilelement zumindest ein sich im Wesentlichen in radiale Richtung erstreckendes Hebelelement (4) angeformt ist, welches an seinem freien Ende einen sich im Wesentlichen in axiale Richtung erstreckenden Fortsatz (5) zum Verspannen mit dem Gegenprofilelement aufweist.

2. Steckverbindungsanordnung nach Anspruch 1, **dadurch gekennzeichnet, dass** das Profilelement und das Gegenprofilelement jeweils etwa scheibenförmig ausgebildet sind, und dass als Profilierung jeweils mehrere über den Umfang angeordnete Eingriffsfenster (2, 2') an dem Profilelement und dem Gegenprofilelement vorgesehen sind, in die jeweils korrespondierende in axiale Richtung vorstehende Eingreifabschnitte des Profilelementes und des Gegenprofilelementes wechselseitig eingreifen.

3. Steckverbindungsanordnung nach Anspruch 2, **dadurch gekennzeichnet, dass** jedes Eingriffsfenster (2, 2') etwa teilkreisringförmig ausgebildet ist.

4. Steckverbindungsanordnung nach Anspruch 2 oder 3, **dadurch gekennzeichnet, dass** die Eingreifabschnitte als gebogene Bereiche (7, 7') ausgebildet sind.

5. Steckverbindungsanordnung nach einem der Ansprüche 2 bis 4, **dadurch gekennzeichnet, dass** jedes Hebelelement (4) mit seinem Fortsatz (5) derart an dem Profilelement angeordnet ist, dass der Fortsatz (5) an einem korrespondierenden Eingriffsfenster (2') des Gegenprofilelementes verspannbar ist.

6. Steckverbindungsanordnung nach Anspruch 5, **dadurch gekennzeichnet, dass** der Fortsatz (5) als etwa um etwa 90° umgebogenes Ende des Hebelelements (4) ausgebildet ist.

7. Steckverbindungsanordnung nach Anspruch 5 oder 6, **dadurch gekennzeichnet, dass** die Querschnittsform des Endes des Fortsatzes (5) etwa keilförmig ausgebildet ist.

8. Steckverbindungsanordnung nach einem der vorangehenden Ansprüche, **dadurch gekennzeichnet, dass** das Profilelement am radial inneren Bereich über den Umfang verteilt angeordnete Ausnehmungen (3) aufweist, welche sich fingerartig in eine radiale Richtung erstrecken.

9. Steckverbindungsanordnung nach Anspruch 8, **dadurch gekennzeichnet, dass** das Hebelelement (4) im Bereich zwischen zwei benachbarten Ausnehmungen (3) angeordnet ist.

10. Steckverbindungsanordnung nach Anspruch 9, **dadurch gekennzeichnet, dass** mehrere Hebelelemente (4) jeweils im Winkel von etwa 120 ° zueinander über den Umfang des Profilelement verteilt angeordnet sind.

11. Vorrichtung zum Dämpfen von Schwingungen im Antriebsstrang eines Fahrzeuges mit einer Dämpfungseinrichtung mit einer Primärmasse und einer Sekundärmasse, wobei die Sekundärmasse über eine axiale Steckverbindungsanordnung, nach einem der vorangehenden Ansprüche, mit einer Kupplungsanordnung gekoppelt ist.

12. Vorrichtung nach Anspruch 11, **dadurch gekennzeichnet, dass** das Profilelement der Steckverbindungsanordnung als Verbindungsdeckel (1) ausgebildet ist, welcher über die Kupplungsanordnung mit der Getriebeeingangswelle (12) verbunden ist.

13. Vorrichtung nach Anspruch 12, **dadurch gekennzeichnet, dass** als Kupplungsanordnung eine Doppelkupplung (10) vorgesehen ist.

14. Vorrichtung nach einem der Ansprüche 11 bis 13, **dadurch gekennzeichnet, dass** das Gegenprofilelement der Steckverbindungsanordnung als Flansch (6) ausgebildet ist, welches mit der Sekundärmasse der Dämpfungseinrichtung (11) verbunden ist.

## Claims

1. Axial plug connection arrangement, with a profile element and with a counter profile element, to which a prestressing torque acting in the circumferential direction can be applied for mutual bracing, the profile element and the counter profile element being profiled in such a way that, when they are joined together axially, a relative movement is provided as a result of the direct engagement of the profiling of the profile element and of the counter profile element one on the other for the purpose of applying a prestressing torque acting in the circumferential direction, the profile element having integrally formed on it at least one lever element (4) which extends essentially in the radial direction and which has at its free end an extension (5), extending essentially in the axial direction, for bracing with the counter profile element.

2. Plug connection arrangement according to Claim 1, **characterized in that** the profile element and the counter profile element are in each case of approximately disc-shaped design, and **in that** the profiling provided comprises in each case a plurality of engagement apertures (2, 2') on the profile element and on the counter profile element which are arranged over the circumference and into which in each case matching engagement portions, projecting in the axial direction, of the profile element and of the counter profile element engage alternately.

3. Plug connection arrangement according to Claim 2, **characterized in that** each engagement aperture (2, 2') is designed approximately in the form of a part-circle.

4. Plug connection arrangement according to Claim 2 or 3, **characterized in that** the engagement portions are designed as bent regions (7, 7').

5. Plug connection arrangement according to one of Claims 2 to 4, **characterized in that** each lever element (4) is arranged with its extension (5) on the profile element in such a way that the extension (5) can be braced on a matching engagement aperture (2') of the counter profile element.

6. Plug connection arrangement according to Claim 5, **characterized in that** the extension (5) is designed as the end, bent round at approximately 90°, of the lever element (4).

7. Plug connection arrangement according to Claim 5 or 6, **characterized in that** the cross-sectional shape of the end of the extension (5) is designed to be approximately wedge-shaped.

8. Plug connection arrangement according to one of the preceding claims, **characterized in that** the profile element has on the radially inner region recesses (3) which are arranged so as to be distributed over the circumference and which extend in a radial direction in a finger-like manner.

9. Plug connection arrangement according to Claim 8, **characterized in that** the lever element (4) is arranged in the region between two adjacent recesses (3).

10. Plug connection arrangement according to Claim 9, **characterized in that** a plurality of lever elements (4) are arranged, in each case at an angle of approximately 120° to one another, so as to be distributed over the circumference of the profile element.

11. Apparatus for the damping of vibrations in the drive train of a vehicle, having a damping device with a primary mass and with a secondary mass, the secondary mass being coupled to a clutch arrangement via an axial plug connection arrangement according to one of the preceding claims.

12. Apparatus according to Claim 11, **characterized in that** the profile element of the plug connection arrangement is designed as a connecting cover (1) which is connected to the transmission input shaft (12) via the clutch arrangement.

13. Apparatus according to Claim 12, **characterized in that** the clutch arrangement provided is a double clutch (10).

14. Apparatus according to one of Claims 11 to 13, **characterized in that** the counter profile element of the plug connection arrangement is designed as a flange (6) which is connected to the secondary mass of the damping device (11).

## Revendications

1. Agencement de connexion enfichable axiale comprenant un élément profilé et un élément profilé conjugué, auxquels peut être appliqué un couple de précontrainte agissant dans la direction périphérique pour le serrage mutuel, l'élément profilé et l'élément profilé conjugué étant profilés de telle sorte que dans le cas d'un assemblage axial, un mouvement relatif par engagement direct l'un contre l'autre des profilés de l'élément profilé et de l'élément profilé conjugué soit prévu pour appliquer un couple de précontrainte agissant dans la direction périphérique,
au moins un élément de levier (4) s'étendant essentiellement dans la direction radiale étant formé sur l'élément profilé, lequel présente à son extrémité libre une saillie (5) s'étendant essentiellement dans la direction axiale pour le serrage avec l'élément profilé conjugué.

2. Agencement de connexion enfichable selon la revendication 1, **caractérisé en ce que** l'élément profilé et l'élément profilé conjugué sont réalisés chacun approximativement en forme de disque, et **en ce qu'**en tant que profilage, sont prévues à chaque fois plusieurs fenêtres d'engagement (2, 2') disposées sur la périphérie, sur l'élément profilé et l'élément profilé conjugué, dans lesquelles viennent en prise en alternance, à chaque fois, des portions d'engagement correspondantes, saillant dans la direction axiale, de l'élément profilé et de l'élément profilé conjugué.

3. Agencement de connexion enfichable selon la revendication 2, **caractérisé en ce que** chaque fenêtre d'engagement (2, 2') est réalisée approximativement en forme de bague circulaire partielle.

4. Agencement de connexion enfichable selon la revendication 2 ou 3, **caractérisé en ce que** les portions d'engagement sont réalisées sous forme de régions cintrées (7, 7').

5. Agencement de connexion enfichable selon l'une quelconque des revendications 2 à 4, **caractérisé en ce que** chaque élément de levier (4) est disposé avec sa saillie (5) sur l'élément profilé de telle sorte que la saillie (5) puisse être serrée sur une fenêtre d'engagement correspondante (2') de l'élément profilé conjugué.

6. Agencement de connexion enfichable selon la revendication 5, **caractérisé en ce que** la saillie (5) est réalisée sous forme d'extrémité de l'élément de levier (4) cintrée approximativement suivant un angle d'environ 90°.

7. Agencement de connexion enfichable selon la revendication 5 ou 6, **caractérisé en ce que** la forme en section transversale de l'extrémité de la saillie (5) est réalisée approximativement en forme de cale.

8. Agencement de connexion enfichable selon l'une quelconque des revendications précédentes, **caractérisé en ce que** l'élément profilé présente des évidements (3) disposés de manière répartie sur la périphérie sur la région radialement interne, qui s'étendent en forme de doigts dans une direction radiale.

9. Agencement de connexion enfichable selon la revendication 8, **caractérisé en ce que** l'élément de levier (4) est disposé dans la région entre deux évidements adjacents (3).

10. Agencement de connexion enfichable selon la revendication 9, **caractérisé en ce que** plusieurs éléments de levier (4) sont à chaque fois disposés de manière répartie sur la périphérie de l'élément profilé suivant un angle d'environ 120° les uns par rapport aux autres.

11. Dispositif pour l'amortissement des vibrations dans la chaîne cinématique d'un véhicule, comprenant un dispositif d'amortissement avec une masse primaire et une masse secondaire, la masse secondaire étant accouplée à un agencement d'embrayage par le biais d'un agencement de connexion enfichable axiale selon l'une quelconque des revendications précédentes.

12. Dispositif selon la revendication 11, **caractérisé en ce que** l'élément profilé de l'agencement de connexion enfichable est réalisé sous forme de couvercle de connexion (1), qui est connecté à l'arbre d'entrée de la boîte de vitesses (12) par le biais de l'agencement d'embrayage.

13. Dispositif selon la revendication 12, **caractérisé en ce que** l'on prévoit comme agencement d'embrayage un double embrayage (10).

14. Dispositif selon l'une quelconque des revendications 11 à 13, **caractérisé en ce que** l'élément profilé conjugué de l'agencement de connexion enfichable est réalisé sous forme de bride (6), qui est connectée à la masse secondaire du dispositif d'amortissement (11).
